# EUROPÄISCHE PATENTANMELDUNG

(11) **EP 3 669 716 A1**
(43) Veröffentlichungstag der Anmeldung: **24.06.2020**
(21) Anmeldenummer: 18213071.6
(22) Anmeldetag: 17.12.2018
(51) Int. Cl.: A47J 31/36

(54) **BRÜHVORRICHTUNG FÜR KAFFEE-VOLLAUTOMATEN, SOWIE KAFFEE-VOLLAUTOMAT MIT BRÜHVORRICHTUNG**

(71) Anmelder: JURA Elektroapparate AG, 4626 Niederbuchsiten (CH)
(72) Erfinder: BÜTTIKER, Philipp, 4625 Oberbuchsiten (CH); ULLMANN, Erich, 4622 Egerkingen (CH); PROBST, Stephan, 4573 Lohn-Ammannsegg (CH)
(74) Vertreter: EGLI-EUROPEAN PATENT ATTORNEYS

(57) **Zusammenfassung**

Es werden eine Brühvorrichtung (100) für einen Kaffee-Vollautomaten sowie ein Kaffee-Vollautomat mit einer Brühvorrichtung (100) bereitgestellt. Die Brühvorrichtung (100) umfasst ein seitlich von einem Brühzylinder (40) begrenztes Brühkammervolumen (10) mit einem in einer Axialrichtung (z) relativ zum Brühzylinder (40) beweglich angeordneten Mahlgutkolben (50). Der Mahlgutkolben (50) weist eine dem Brühkammervolumen (10) zugewandte Mahlgutauflage (51) mit einer Mehrzahl von axialen Brühwasser-Auslassöffnungen (70-1...70-8, 70-11...70-13) auf. Die axialen Brühwasser-Auslassöffnungen (70-1...70-8, 70-11...70-13) sind zum Auslassen von Brühwasser in im Wesentlichen der Axialrichtung (z) konfiguriert. Wenigstens eine (70-11...70-13) der axialen Brühwasser-Auslassöffnungen ist gegenüber wenigstens einer weiteren (70-1...70-8) der axialen Brühwasser-Auslassöffnungen in der Axialrichtung (z) versetzt.

## Beschreibung

### Technisches Gebiet

Die Erfindung bezieht sich auf eine Brühvorrichtung für einen Kaffee-Vollautomaten. Sie betrifft ausserdem einen Kaffee-Vollautomaten, der mit einer hierin beschriebenen Brühvorrichtung ausgestattet ist.

### Stand der Technik

Kaffee-Vollautomaten, auch als vollautomatisch funktionierende Kaffeemaschinen bezeichnet, sind mit einer Brühvorrichtung ausgestattet, mittels welcher gemahlenes Kaffeepulver mit Brühwasser benetzt und durchdrungen wird. Hierfür weist eine herkömmliche Brühvorrichtung eine Brühkammer auf, welche das Kaffeemehl im Brühkammervolumen aufnimmt. Öffnungen zum Auslassen des Brühwassers, so genannte Brühwasser-Auslassöffnungen, sind auf der einen Seite der Brühkammer am Brühwassereinlass bereitgestellt. Das ausgelassene und in die Brühkammer eintretende Brühwasser durchdringt das Kaffeemehl. Auf der anderen Seite der Brühkammer sind Getränke-Austrittsöffnungen bereitgestellt, durch welche die Flüssigkeit, die das zubereitete Kaffeegetränk bilden soll, beispielweise in einen Getränkeauslass austritt. Eine herkömmliche Brühvorrichtung ist zum Beispiel in der EP 0 559 620 B1 gezeigt.

Bei den herkömmlichen Brühvorrichtungen erfolgt der Wassereintritt in die Brühkammer aus den Brühwasser-Auslassöffnungen mitunter so, dass das Kaffeepulver ungleichmässig umströmt wird. Mitunter wird nicht das gesamte Kaffeearoma aus dem Pulver gelöst, wodurch sich die Menge an benötigtem Kaffeemehl erhöht, die für einen gewünschten Geschmack, beispielweise eine gewünschte Geschmacksintensität, erforderlich ist. Mit anderen Worten: Bei den herkömmlichen Brühvorrichtungen ist die geschmackliche Qualität des hergestellten Kaffeegetränks für eine bestimmte Menge Kaffeemehl herabgesetzt.

### Zusammenfassung der Erfindung

Der vorliegenden Erfindung liegt die Aufgabe zugrunde, die genannten Nachteile zu vermeiden. Es ist eine Aufgabe der vorliegenden Erfindung, eine Brühvorrichtung für einen Kaffee-Vollautomaten oder einen Kaffee-Vollautomaten mit einer entsprechenden Brühvorrichtung anzugeben, wobei die geschmackliche Qualität des hergestellten Kaffeegetränks verbessert ist.

Die Aufgabe wird gelöst durch eine Brühvorrichtung mit den Merkmalen des Patentanspruchs 1 oder durch einen Kaffee-Vollautomaten mit einer Brühvorrichtung gemäss dem Patentanspruch 10.

Gemäss einem Aspekt umfasst die Brühvorrichtung ein seitlich von einem Brühzylinder begrenztes Brühkammervolumen. Ein Mahlgutkolben ist in einer Axialrichtung relativ zum Brühzylinder beweglich angeordnet. Der Mahlgutkolben hat eine Mahlgutauflage, die dem Brühkammervolumen zugewandt ist. Die Mahlgutauflage weist eine Mehrzahl von axialen Brühwasser-Auslassöffnungen auf. Die axialen Brühwasser-Auslassöffnungen sind so konfiguriert, dass sie Brühwasser im Wesentlichen in der Axialrichtung auslassen. Wenigstens eine der axialen Brühwasser-Auslassöffnungen ist gegenüber wenigstens einer anderen der axialen Brühwasser-Auslassöffnungen in der Axialrichtung versetzt.

Die Axialrichtung, wie hierin verwendet, ist die Richtung, in welcher die Achse eines typischerweise zylindrischen Brühzylinders verläuft; der Brühzylinder ist jedoch nicht auf eine zylindrische Bauform beschränkt. Im Allgemeinen entspricht die Axialrichtung der Richtung, in welcher der Mahlgutkolben innerhalb des Brühzylinders bewegt wird, typischerweise zum Ausstossen von ausgelaugtem Kaffeemehl oder Kaffeepulver nach einem Zubereitungsvorgang.

Das axiale Versetzen der wenigstens einen axialen Brühwasser-Auslassöffnung relativ zu wenigstens einer anderen axialen Brühwasser-Auslassöffnung trägt dazu bei, dass das Brühwasser in mehreren Ebenen in das Kaffeepulver eingeleitet wird, was zu einer verbesserten Benetzung des Kaffeepulvers beitragen kann.

Durch die Einströmung des Brühwassers in mehreren Ebenen und ggf. mehreren Richtungen wird das Kaffeepulver insgesamt gleichmässiger durchströmt, wodurch die Geschmacksstoffe besser aus dem Pulver extrahiert werden können. Das Kaffeepulver wird mithin infolge der mehrdimensionalen An- und Durchströmung besser ausgenutzt.

In Vergleichsversuchen hat sich gezeigt, dass mit der erfindungsgemässen Lösung eine vorteilhaft dunklere Crema erhalten werden kann.

Das während einer Kaffeezubereitung durchströmte Kaffeemehl, der so genannte Trester, kann infolge der Mehrzahl von Austrittsöffnungen und deren Anordnung in mehreren Ebenen besser ausgepresst werden, wodurch der Trester trockener wird und besser, insbesondere rückstandsfreier, ausgeworfen werden kann.

Ein mit einer hierin beschriebenen Brühvorrichtung ausgestatteter Kaffee-Vollautomat kann Vorteile bei der Reinigung haben. Bei einem Reinigungsvorgang wird beispielsweise eine Reinigungsflüssigkeit durch die Brühwasser-Auslassöffnungen des Mahlgutkolbens geleitet. Das Brühkammervolumen ist dabei üblicherweise leer. Der Eintritt der Reinigungsflüssigkeit in das leere Brühkammervolumen kann bei der hierin beschriebenen Brühvorrichtung mit je einem Wasserstrahl pro Brühwasser-Auslassöffnung erfolgen.

Bei Ausführungsformen ist wenigstens eine der axialen Brühwasser-Auslassöffnungen in einer ersten Fläche ausgebildet. Wenigstens eine der axialen Brühwasser-Auslassöffnungen ist in einer zweiten Fläche ausgebildet. Die erste Fläche ist zumindest an einem Punkt von der zweiten Fläche in der Axialrichtung beabstandet. Es kann vorgesehen sein, dass der axiale Abstand, mithin der Abstand in der Axialrichtung, zwischen der ersten Fläche und der zweiten Fläche im Wesentlichen konstant ist.

Des Weiteren kann es vorgesehen sein, dass - bei im Wesentlichen konstantem axialen Abstand der ersten Fläche von der zweiten Fläche - die erste Fläche im Wesentlichen senkrecht zur Axialrichtung verläuft. Alternativ oder zusätzlich kann es vorgesehen sein, dass - bei im Wesentlichen konstantem axialen Abstand der ersten Fläche von der zweiten Fläche - die zweite Fläche im Wesentlichen senkrecht zur Axialrichtung verläuft.

Es kann auch vorgesehen sein, dass die erste Fläche bezogen auf die Axialrichtung gekrümmt verläuft. Alternativ oder zusätzlich kann es vorgesehen sein, dass die zweite Fläche bezogen auf die Axialrichtung gekrümmt verläuft. Ein gekrümmter Verlauf, wie hierin verwendet, umfasst insbesondere einen konvexen oder konkaven Verlauf in Bezug auf eine Ebene, die im Wesentlichen senkrecht zur Axialrichtung verläuft.

Bei Ausführungsformen umfasst der Mahlgutkolben ferner eine oder mehrere radiale Brühwasser-Auslassöffnungen. Die mindestens eine radiale Brühwasser-Auslassöffnung ist konfiguriert zum Auslassen von Brühwasser in im Wesentlichen einer Radialrichtung.

Die Radialrichtung, wie hierin verwendet, ist insbesondere die Richtung des Radius des typischerweise zylindrischen, aber nicht auf die Zylinderform beschränkten, Brühzylinders.

Bei Ausführungsformen umfasst die Mahlgutauflage eine Erhebung in Axialrichtung. Die Erhebung in Axialrichtung wird von der zweiten Fläche tangiert oder berührt. Mit anderen Worten: Die zweite Fläche ist ungefähr eine Tangente an die Erhebung in Axialrichtung.

Bei Ausführungsformen umfasst der Mahlgutkolben einen Brühwasser-Einlassanschluss und eine Verteilkanal. Der Verteilkanal steht mit dem Brühwasser-Einlassanschluss in Fluidverbindung, typischerweise in direkter Fluidverbindung. Der Verteilkanal ist konfiguriert zum Versorgen von zumindest einer der Mehrzahl von axialen Brühwasser-Auslassöffnungen mit Brühwasser, das ihm vom Brühwasser-Einlassanschluss zugeleitet wird. Der Verteilkanal hat eine Querschnittsfläche, deren Wert zwischen dem 0,5-Fachen und dem 1,5-Fachen der Querschnittsfläche des Brühwasser-Einlassanschlusses liegt.

Bei Ausführungsformen hat ein Durchmesser von zumindest einer der mehreren axialen Brühwasser-Auslassöffnungen einen Durchmesser im Bereich zwischen 0,5 und 1,5 mm, vorzugsweise im Bereich zwischen 0,8 und 1,0 mm. Typischerweise haben die Mehrzahl der axialen Brühwasser-Auslassöffnungen oder sämtliche axialen Brühwasser-Auslassöffnungen einen Durchmesser im Bereich zwischen 0,5 und 1,5 mm, vorzugsweise im Bereich zwischen 0,8 und 1,0 mm.

Gemäss einem weiteren Aspekt wird ein Kaffee-Vollautomat bereitgestellt, der eine hierin beschriebene Brühvorrichtung umfasst.

### Kurze Beschreibung der Zeichnungen

Weitere Einzelheiten der Erfindung und insbesondere beispielhafte Ausführungsformen der erfindungsgemässen Brühvorrichtung werden im Folgenden anhand der beigefügten Zeichnungen erläutert. Es zeigen:
- Fig. 1: eine schematische Schnittansicht einer Brühvorrichtung gemäss einer Ausführungsform, entlang der Linie I-I in Fig. 2;
- Fig. 2: eine schematische Schnittansicht der Brühvorrichtung aus Fig. 1 entlang der Linie II-II;
- Fig. 3: eine schematische perspektivische Ansicht eines Mahlgutkolbens, der in einer Brühvorrichtung gemäss den hierin beschriebenen Ausführungsformen verwendbar ist;
- Fig. 4: eine Draufsicht auf den Mahlgutkolben aus Fig. 3;
- Fig. 5: eine perspektivische teilweise Explosionsansicht des Mahlgutkolbens aus Fig. 3 und 4 von schräg oben; und
- Fig. 6: eine perspektivische teilweise Explosionsansicht des Mahlgutkolbens aus Fig. 3 und 4 von schräg unten.

### Beschreibung von Ausführungsformen

Für dieselben Elemente in den Figuren sind jeweils dieselben Bezugszeichen verwendet, wenn nichts anderes erwähnt ist. Redundante Beschreibungen identischer oder ähnlicher Bestandteile in den verschiedenen Zeichnungen sind weggelassen. Zweiteilige Bezugszeichen in der Form X-Y bezeichnen Gruppen von im Wesentlichen gleichen oder ähnlichen Elementen oder Bestandteilen, wobei für eine jeweilige Elementgruppe X eine feste natürliche Zahl ist und Y eine variable natürliche Zahl ist, z. B. 70-1, 70-2 als Elemente 1, 2 einer Gruppe 70 oder 80-1, 80-2 als Elemente 1, 2 einer Gruppe 80. Sofern es nicht auf ein Nebeneinander der Elemente ankommt, kann das entsprechende Element in den Zeichnungen und in der untenstehenden Beschreibung auch einteilig bezeichnet sein, z. B. einfach als Element 70 oder als Element 80.

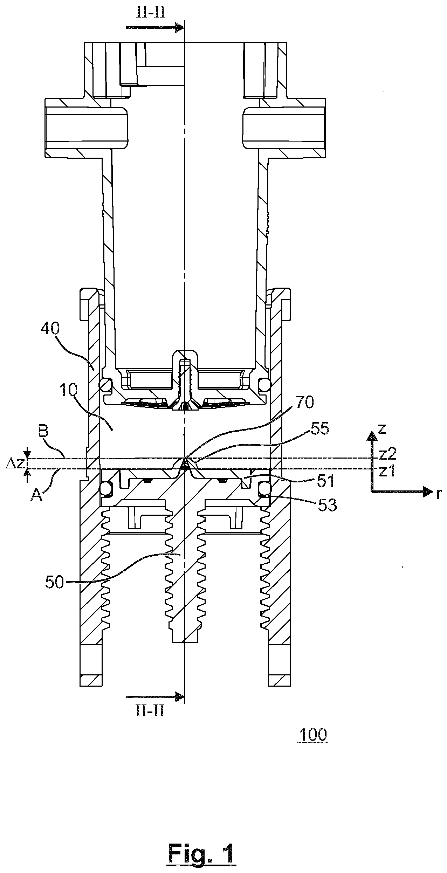

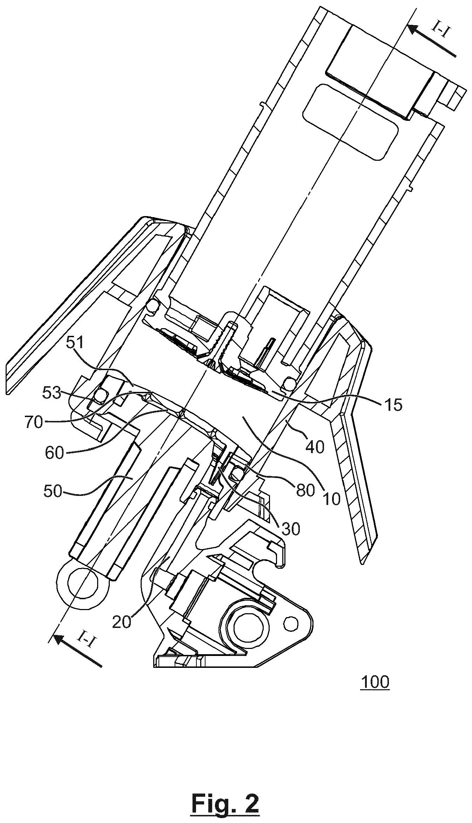

Fig. 1 zeigt eine schematische Schnittansicht einer Brühvorrichtung 100 gemäss einer Ausführungsform. Fig. 2 zeigt eine weitere schematische Schnittansicht der Brühvorrichtung 100 aus einer anderen Perspektive. Fig. 1 stellt hierbei den Schnitt entlang der Linie I-I in Fig. 2 dar; entsprechend stellt Fig. 2 den Schnitt entlang der Linie II-II in Fig. 1 dar. Die beiden Schnittansichten werden hier gemeinsam beschrieben.

Die Brühvorrichtung 100 kommt typischerweise in einem Kaffee-Vollautomaten - einer vollautomatischen Kaffeemaschine - zum Einsatz, wobei die übrigen typischen Bestandteile eines solchen Kaffee-Vollautomaten hier nicht gezeigt sind. Beispiele für solche übrigen typischen Bestandteile umfassen ein Mahlwerk, einen Brühwassertank, eine Brühwasser-Heizeinrichtung, einen Kaffeeauslass inklusive dem zugehörigen Leitungssystem usw.

In der Brühvorrichtung 100 wird ein Brühkammervolumen 10 seitlich von einem Brühzylinder 40 begrenzt. Ein Mahlgutkolben 50 ist von der Unterseite her in den Brühzylinder 40 eingeführt und mittels eines in eine Nut 53 eingelegten und radial umlaufenden Dichtringes abgedichtet. Eine Oberseite des Mahlgutkolbens 50 bildet eine Mahlgutauflage 51 für das Mahlgut, mithin also das Kaffeemehl oder Kaffeepulver. Die Mahlgutauflage 51 begrenzt das Brühkammervolumen 10 von der Unterseite her. Die obere Begrenzung des Brühkammervolumens 10 wird von der Unterseite eines Brühkolbens 15 gebildet; hier ist typischerweise ein Sieb oder ähnliches angeordnet, das feinmaschig genug ist, um einen Grossteil des Mahlgutes zurückzuhalten und Flüssigkeit passieren zu lassen.

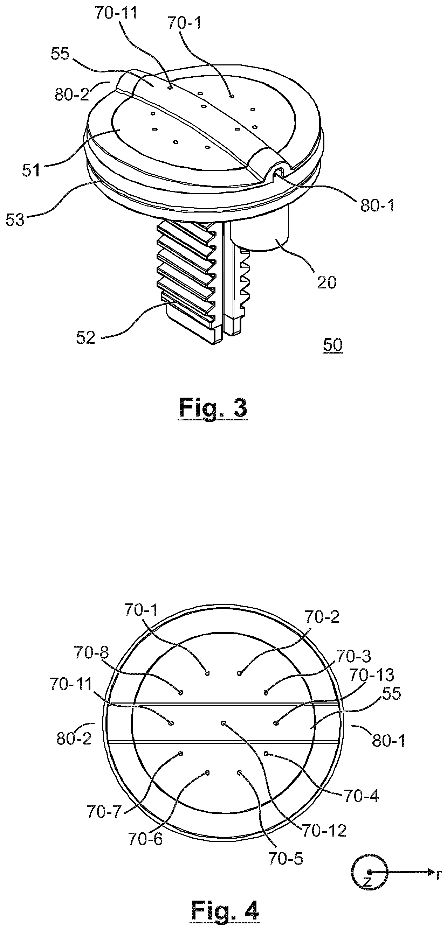

Der Mahlgutkolben 50, oder Ausstosserkolben, kann zum Auswerfen von verbrauchtem, ausgelaugtem Mahlgut im Brühzylinder 40 entlang einer Achse z, d. h. in Axialrichtung, verschoben werden, beispielsweise durch Eingriff in einen zahnstangenartigen Fortsatz 52 des Mahlgutkolbens, wie beispielsweise in Fig. 3 ersichtlich, die weiter unten noch beschrieben wird.

Bei den im Stand der Technik verwendeten Mahlgutkolben besteht mitunter das Problem, dass das ausgelaugte Mahlgut im Brühkammervolumen lokal zu feucht ist. Dadurch können bei einem herkömmlichen Mahlgutkolben beispielsweise Mahlgutrückstände an dessen Mahlgutauflage haften bleiben, die bei einem derartigen Mahlgut-Auswerfvorgang zurückbleiben und den Geschmack des nachfolgenden Kaffeegetränks beeinträchtigen können.

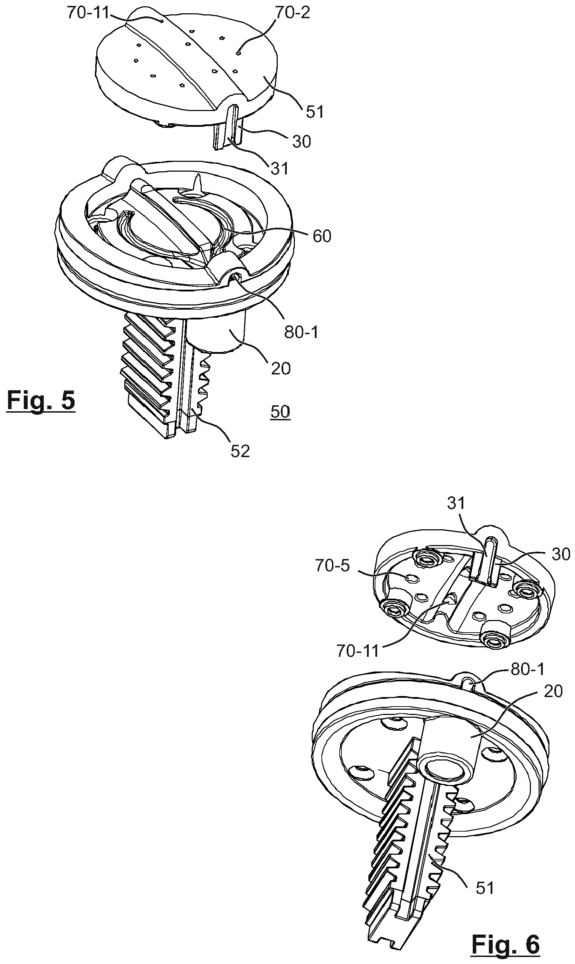

Bei der erfindungsgemässen Brühvorrichtung 100 ist der Mahlgutkolben 50 aus den Fig. 1 und 2 so konfiguriert, wie in den Fig. 3-6 separat dargestellt. Die folgende Beschreibung nimmt gemeinsamen Bezug auf die Fig. 1 und 2 sowie die Darstellungen des Mahlgutkolbens 50 in den Fig. 3-6. Dabei zeigt Fig. 3 eine schematische perspektivische Ansicht des Mahlgutkolbens 50, Fig. 4 zeigt eine Draufsicht auf den Mahlgutkolben 50 aus Fig. 3, Fig. 5 zeigt eine perspektivische teilweise Explosionsansicht des Mahlgutkolbens aus Fig. 3 und 4 von schräg oben, und Fig. 6 zeigt eine perspektivische teilweise Explosionsansicht des Mahlgutkolbens aus Fig. 3 und 4 von schräg unten.

In der Mahlgutauflage 51 des Mahlgutkolbens 50 ist eine Erhebung 55 ausgebildet, die in der dargestellten Ausführungsform als Steg durch den Mittelpunkt der kreisrunden Fläche des Mahlgutkolbens 50 verläuft, die die Mahlgutauflage 51 enthält; die Erfindung ist jedoch nicht auf diese spezifische Ausführung beschränkt, und es kann auch eine anders geartete und/oder an anderer Stelle positionierte Erhebung bereitgestellt sein.

Zentral in der Erhebung 55 sind ein oder mehrere - in der dargestellten Ausführungsform drei - Brühwasser-Auslassöffnungen 70-11, 70-12, 70-13 bereitgestellt. Jenseits der Erhebung 55 sind in der Mahlgutauflage weitere Brühwasser-Auslassöffnungen 70-1 bis 70-8 bereitgestellt. Sämtliche Brühwasser-Auslassöffnungen 70-11 bis 70-13, 70-1 bis 70-8 sind axiale Brühwasser-Auslassöffnungen, d. h. sie leiten von unten zugeführtes Brühwasser im Wesentlichen in der Axialrichtung z in das Brühkammervolumen 10 ein.

Die Brühwasser-Auslassöffnungen 70-1 bis 70-8 sind in einer Ebene A angeordnet, die in etwa senkrecht zur Axialrichtung z ausgerichtet ist. Die Brühwasser-Auslassöffnungen 70-11 bis 70-13 sind in einer Ebene B angeordnet, die ebenfalls in etwa senkrecht zur Axialrichtung z ausgerichtet ist. Die Ebenen A, B haben in Axialrichtung z einen Abstand Δz voneinander, der verschieden von null ist. Dieser Abstand Δz entspricht der Höhe der Erhebung 55 in Axialrichtung z ausgehend von der Mahlgutauflage 51. Die Brühwasser-Auslassöffnungen 70-11 bis 70-13 sind demnach gegenüber den Brühwasser-Auslassöffnungen 70-1 bis 70-8 in der Axialrichtung z in etwa um den Abstand Δz versetzt.

Es sei angemerkt, dass diese Ausführungsform nur ein Beispiel ist, und dass zur Verwirklichung der Erfindung nur mindestens eine der axialen Brühwasser-Auslassöffnungen 70-1 bis 70-8, 70-11 bis 70-13 das ihr zugeführte Brühwasser in einem ersten axialen Abstand z1 von der Mahlgutauflage 51 in das Brühkammervolumen 10 auszulassen braucht und mindestens eine andere der axialen Brühwasser-Auslassöffnungen 70-1 bis 70-8, 70-11 bis 70-13 das ihr zugeführte Brühwasser in einem zweiten axialen Abstand z2 von der Mahlgutauflage 51 in das Brühkammervolumen 10 auszulassen braucht, wobei der erste axiale Abstand z1 und der zweite axiale Abstand z2 voneinander verschieden sind, und wobei einer von dem ersten axialen Abstand z1 und dem zweiten axialen Abstand z2 auch - ohne Beschränkung - null sein kann.

Es kann insbesondere auch vorgesehen sein, dass mindestens eine der Ebenen A, B und vorzugsweise beide Ebenen A, B gleichermassen gekrümmt verlaufen. Beispielsweise sind konvexe oder konkave Krümmungen denkbar. In einem Beispiel mit einer konvexen Krümmung, bei welchem die Ebene A mit der Mahlgutauflage 51 zusammenfällt, kann beispielsweise dort aufgebrachtes Wasser in vorteilhafter Weise besser abfliessen, was einen trockener pressbaren Trester zur Folge haben kann.

Von den jeweiligen axialen Brühwasser-Auslassöffnungen 70 ausgegebenes Brühwasser wird dementsprechend auf verschiedenen axialen Niveaus in das Brühkammervolumen 10 eingeleitet. Dadurch kann sich eine vorteilhafte, insbesondere eine gegenüber den herkömmlichen Lösungen gleichmässigere Ausbreitung des in das Brühkammervolumen 10 eingeleiteten Brühwassers durch das Kaffeepulver hindurch ergeben, was zu einem besseren Kaffeearoma führen kann.

Typischerweise sind zumindest die axialen Brühwasser-Auslassöffnungen 70-1 bis 70-8, die sich in der Ebene A befinden, radial über die Fläche der Mahlgutauflage 51 verteilt. Wie in der Draufsicht in Fig. 4 ersichtlich, sind sie axialen Brühwasser-Auslassöffnungen 70-1 bis 70-8, die sich in der Ebene A befinden, vorzugsweise jeweils in gleichem radialen Abstand r vom Mittelpunkt der kreisrunden Fläche der Mahlgutauflage 51 und zueinander im gleichen Winkelabstand angeordnet; die Erfindung ist hierauf aber nicht beschränkt.

In der dargestellten Ausführungsform liegt der Durchmesser der axialen Brühwasser-Auslassöffnungen 70 im Bereich zwischen 0,5 und 1,5 mm und beträgt beispielsweise in etwa 0,8 bis 1,0 mm, ist jedoch auf die genannten Zahlenwerte nicht beschränkt. Insbesondere kann der Durchmesser auch bei den unterschiedlichen Arten von axialen Brühwasser-Auslassöffnungen, d. h. denjenigen in der Erhebung 55 und denjenigen in der übrigen Fläche der Mahlgutauflage, unterschiedlich sein.

In der dargestellten Ausführungsform weist der Mahlgutkolben 50 ausserdem Brühwasser-Auslassöffnungen 80-1, 80-2 auf, die vorliegend und ohne Beschränkung an den radialen Endseiten des Steges bereitgestellt sind, welcher die Erhebung 55 bildet. Die Brühwasser-Auslassöffnungen 80-1, 80-2 sind als radiale Brühwasser-Auslassöffnungen ausgebildet, d. h. sie sind derart konfiguriert und angeordnet, dass sie das Brühwasser, das ihnen von unten zugeleitet wird, im Wesentlichen in der Radialrichtung r in das Brühkammervolumen 10 ausgeben. Durch die zusätzlichen radialen Brühwasser-Auslassöffnungen 80-1, 80-2 kann eingeleitetes Brühwasser zusätzlich aus einer weiteren Richtung in das Brühkammervolumen 10 eintreten, was die Benetzung und Auslaugung des Kaffeepulvers weiter verbessern kann.

Zur Brühwasserzufuhr kann der Mahlgutkolben 50 einen Brühwasser-Einlassanschluss 20 umfassen. Der Brühwasser-Einlassanschluss 20 steht in Fluidverbindung mit einem Verteilerkanal 60, wie in Fig. 5 dargestellt, der im Wesentlichen radial umläuft. Der Verteilkanal 60 in Ringsegmentform versorgt die axialen Brühwasser-Auslassöffnungen 70-1 bis 70-8 mit dem zugeführten Brühwasser vom Brühwasser-Einlassanschluss 20. Der Verteilkanal 60 hat eine Querschnittsfläche, d. h. einen Querschnittsflächeninhalt in Axialrichtung z, die das 0,5-Fache bis 1,5-Fache der Querschnittsfläche des Brühwasser-Einlassanschlusses 20 aufweist. Hierdurch ist der Totraum, d. h. das nicht genutzte Volumen von zugeführtem Brühwasser, gegenüber herkömmlichen Vorrichtungen verringert. Es wird also weniger Brühwasser zur Zubereitung benötigt.

Oben wurden Ausführungsformen der vorliegenden Erfindung anhand der Zeichnungen erläutert. Es versteht sich jedoch, dass eine fachkundige Person zahlreiche Modifikationen im Rahmen der vorliegenden Offenbarung vornehmen kann, und dass einzelne Merkmale und/oder Bestandteile geeignet abgewandelt, ergänzt oder weggelassen werden können. Abwandlungen der hierin diskutierten Aspekte, Merkmale und Ausführungsformen sind dem Fachmann geläufig.

## Patentansprüche

1. Brühvorrichtung (100) für einen Kaffee-Vollautomaten, wobei die Brühvorrichtung (100) ein seitlich von einem Brühzylinder (40) begrenztes Brühkammervolumen (10) mit einem in einer Axialrichtung (z) relativ zum Brühzylinder (40) beweglich angeordneten Mahlgutkolben (50) umfasst,
wobei der Mahlgutkolben (50) eine dem Brühkammervolumen (10) zugewandte Mahlgutauflage (51) mit einer Mehrzahl von axialen Brühwasser-Auslassöffnungen (70-1...70-8, 70-11...70-13) umfasst, wobei die axialen Brühwasser-Auslassöffnungen (70-1...70-8, 70-11...70-13) zum Auslassen von Brühwasser in im Wesentlichen der Axialrichtung (z) konfiguriert sind,
wobei wenigstens eine (70-11...70-13) der axialen Brühwasser-Auslassöffnungen gegenüber wenigstens einer weiteren (70-1...70-8) der axialen Brühwasser-Auslassöffnungen in der Axialrichtung (z) versetzt ist.

2. Brühvorrichtung (100) nach Anspruch 1, wobei wenigstens eine (70-1...70-8) der axialen Brühwasser-Auslassöffnungen in einer ersten Fläche (A) ausgebildet ist und wenigstens eine (70-11...70-13) der axialen Brühwasser-Auslassöffnungen in einer zweiten Fläche (B) ausgebildet ist, wobei die erste Fläche (A) zumindest an einem Punkt von der zweiten Fläche (B) in Axialrichtung (z) beabstandet ist.

3. Brühvorrichtung (100) nach Anspruch 2, wobei der Abstand in Axialrichtung (z) der ersten Fläche (A) zur zweiten Fläche (B) im Wesentlichen konstant ist.

4. Brühvorrichtung (100) nach Anspruch 3, wobei die erste Fläche (A) und/oder die zweite Fläche (B) im Wesentlichen senkrecht zur Axialrichtung (z) verlaufen.

5. Brühvorrichtung (100) nach Anspruch 3, wobei die erste Fläche (A) und/oder die zweite Fläche (B) bezogen auf die Axialrichtung (z) gekrümmt verläuft, insbesondere konvex oder konkav gekrümmt verläuft.

6. Brühvorrichtung (100) nach einem der vorhergehenden Ansprüche, wobei der Mahlgutkolben (50) weiter eine radiale Brühwasser-Auslassöffnung (80-1, 80-2) zum Auslassen von Brühwasser in im Wesentlichen einer Radialrichtung (r) umfasst.

7. Brühvorrichtung (100) nach einem der vorhergehenden Ansprüche, wobei die Mahlgutauflage (51) eine Erhebung (55) in Axialrichtung (z) umfasst, welche von der zweiten Fläche (B) tangiert wird.

8. Brühvorrichtung (100) nach einem der vorhergehenden Ansprüche, wobei der Mahlgutkolben (50) einen Brühwasser-Einlassanschluss (20) und einen mit dem Brühwasser-Einlassanschluss (20) in Fluidverbindung stehenden Verteilkanal (60) zum Versorgen zumindest einer der Mehrzahl von axialen Brühwasser-Auslassöffnungen (70-1...70-8, 70-11...70-13) umfasst, wobei der Verteilkanal (60) eine Querschnittsfläche mit einem Wert zwischen dem 0,5-Fachen und dem 1,5-Fachen der Querschnittsfläche des Brühwasser-Einlassanschlusses (20) aufweist.

9. Brühvorrichtung (100) nach einem der vorhergehenden Ansprüche, wobei ein Durchmesser von zumindest einer der Mehrzahl von axialen Brühwasser-Auslassöffnungen (70-1...70-8, 70-11...70-13), insbesondere von allen axialen Brühwasser-Auslassöffnungen (70-1...70-8, 70-11...70-13), im Bereich zwischen 0,5...1,5 mm, vorzugsweise im Bereich zwischen 0,8...1,0 mm liegt.

10. Kaffee-Vollautomat, umfassend einen Brühvorrichtung (100) nach einem der vorhergehenden Ansprüche.
